(19) **Europäisches Patentamt**
**European Patent Office**
**Office européen des brevets**

(11) **EP 4 546 215 A1**

(12) **EUROPEAN PATENT APPLICATION**

(43) Date of publication:
**30.04.2025 Bulletin 2025/18**

(21) Application number: **23205788.5**

(22) Date of filing: **25.10.2023**

(51) International Patent Classification (IPC):
***G06N 3/0455*** (2023.01)    ***G06N 3/0475*** (2023.01)
***G06N 3/084*** (2023.01)

(52) Cooperative Patent Classification (CPC):
**G06N 3/0455; G06N 3/0475; G06N 3/084**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **DeepMind Technologies Limited**
**London EC4A 3TW (GB)**

(72) Inventor: **Banino, Andrea**
**London, EC4A 3TW (GB)**

(74) Representative: **Marks & Clerk GST**
**1 New York Street**
**Manchester M1 4HD (GB)**

(54) **IMPROVING MULTI-MODAL LANGUAGE MODEL NEURAL NETWORK**

(57)    A method is proposed for generating a multi-modal language model (MMLM) neural network trained to perform a multi-modal task on an input data element comprising at least one media input (an image or sound signal) to generate a token output which is a text response to the input data element. The method employs a decoder network trained to use the token output to generate reconstructed media tokens. Repeated modifications are made to the MMLM to reduce a discrepancy between the reconstructed media tokens and media tokens generated from the media input(s) by a media encoder neural network.

Fig. 5

## Description

BACKGROUND

This specification relates to processing input data elements that include images using neural networks.

Neural networks are machine learning models that employ one or more layers of nonlinear units to predict an output for a received input. Some neural networks include one or more hidden layers in addition to an output layer. The output of each hidden layer is used as input to the next layer in the network, e.g., the next hidden layer or the output layer. Each layer of the network generates an output from a received input in accordance with current values of a respective set of parameters.

SUMMARY

This specification describes a system implemented as computer programs on one or more computers in one or more locations that generates a multi-modal language model, "MMLM" (e.g. a visual language model neural network, "VLM"); that is, a neural network which performs a multi-modal task on an input data element comprising at least one media input, e.g. a non-textual input. For example, the media input may be an image input, a video input, and/or a sound input. The multi-modal language model may optionally select one or more input text tokens from a vocabulary of text tokens, to generate a token output comprising text tokens (selected from a vocabulary, e.g., the same vocabulary, of text tokens) and representing a text response to the input data element.

In general terms, the proposed method employs a decoder network trained to use the token output generated by the MMLM upon receiving an input data element, to generate reconstructed media tokens (which in the case that the media input is an image may be called image tokens, or in the case that the media input is a sound signal may be called sound tokens). During a training phase, repeated modifications are made to the MMLM (optionally, jointly with updates to the decoder network), to reduce a discrepancy between the reconstructed media tokens (i.e. image or sound tokens) and media tokens (image or sound tokens) generated from the media input by a first media encoder neural network (i.e. an image encoder neural network or a sound encoder neural network).

The first media encoder neural network may be one which is configured to generate media tokens which are suitable for use by a generation model to regenerate a media item, e.g. media tokens from which the media input may be substantially reconstructed. The first media encoder neural network may be one obtained by iterative updating of the first media encoder neural network within a training system in which media tokens output by the first media encoder neural network upon receiving a given training media input, are used to regenerate a media item, and then modifications are made to the first media encoder neural network based on the regenerated media item.

For example, in the case that each media input to the first media encoder neural network is an input image, the first media encoder neural network (which may in this case be called a first image encoder neural network), may be configured to generate media tokens (i.e. image tokens) which are suitable for use by an image generation model, such as the Imagen text-to-image diffusion model (C. Saharia et al., "Photorealistic Text-to-Image Diffusion Models with Deep Language Understanding", 2022, arXiv:2205.11487), to regenerate an input image. The regenerated image may meet a similarity criterion with respect to the input image, and may indeed be substantially identical to the input image (e.g. the first image encoder neural network may be one configured to perform substantially lossless encoding). The first image encoder neural network may have been obtained by training it within a training system in which the image tokens which it generates based on a training image it receives are used by an image generation system to form a regenerated image, and then modifications are made to the first image encoder neural network (and optionally also to the image generation system) based on the regenerated image (e.g. to reduce a discrepancy between the training image and the regenerated image, or so as to make it harder for a discriminator network to determine that the regenerated image was produced by the image generation system (i.e. make it harder distinguish between the regenerated image and images which were not generated by the image generation system)).

A MMLM generated by these methods may be used to perform the multi-modal task.

In an example implementation, the MMLM may have been pre-trained to perform the multi-modal task before the training phase. Thus, the repeated modifications during the training phase perform a re-training, during which the pre-trained MMLM is further trained to improve its "grounding" on the media input(s) of the input data elements.

The (re)training has been found to increase consistency between the token output and the media inputs, thereby reducing a number of problems to which MMI,Ms are subject. For example, it may reduce the risk that, the MMLM is confused in interpreting the media input, e.g. mistakenly claiming that the media input(s) contain content which in fact they do not ("hallucination"), or generating successive outputs which contradict each other with regard to the interpretation of the media input(s). In another example, it may reduce the "suggestibility" of the multi-modal language model, in which the input text tokens influence the multi-modal language model to misidentify features of the media input(s). Particularly in the case that the first media encoder neural network generated media tokens (i.e. representations of the media inputs) which are configured for generating images, they provide a useful representation of the actual visual contents of the media input, and hence can be used to form a reconstruction loss term indicative of the ability of the reconstructed media tokens to be used to reconstruct the media input.

The first encoder neural network may be trained to generate media tokens from a given media input which have a data size (e.g. as measured in bytes) which is lower (e.g. an order of magnitude lower) than the data size of the corresponding media input.

Note that in principle it would be possible to omit the first media encoder neural network, i.e. for the decoder network to be trained to reconstruct the media input(s) of the input data element, rather than media tokens generated from the media input(s) by the first media encoder neural network. For example, in the case of media inputs which are input images, the decoder network could be trained to reconstruct the input images. However, this would require significantly increased computation, since it would be performed in pixel space. Furthermore, devising a suitable loss function for training the decoder network may be harder, as the image it would reconstruct from a given token output could be any of a large number of semantically similar images, e.g. differing by various transformations.

The present concepts may be expressed as computer-implemented methods. Alternatively, they may be expressed as computer systems configured to perform the methods. Alternatively, they may be expressed as computer program products (e.g. one or more computer-readable storage media, or software products downloadable over a communications network) storing or containing instructions which perform the methods when executed by one or more computer systems.

The details of embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a schematic diagram of an example VLM.
FIG. 2 is a more specific example of a VLM.
FIG. 3 is shows two layers of a multi-modal network of the VLM of FIG. 2.
FIG. 4 shows an example of a VLM performing a multi-modal task.
FIG. 5 shows a system for training a decoder model.
FIG. 6 shows a system for generating a VLM
FIG. 7 shows another system for generating a VLM
FIG. 8 is a flow diagram of a method of generating a VLM
FIG. 9 shows sub-steps of a step of the method of FIG. 8

Like reference numbers and designations in the various drawings indicate like elements.

DETAILED DESCRIPTION

This specification describes a method implemented as computer programs on one or more computers in one or more locations that performs one or more multi-modal tasks.

The method is for generating a multi-modal language model ("MMLM"), and may comprise a training phase of repeatedly performing the following set of steps:

    obtaining an input data element comprising at least one media input (where a media input is a media item which is an input image or input sound signal) and optionally one or more input text tokens;
    processing the input data element by the MMLM to generate a corresponding token output comprising text tokens from a vocabulary of text tokens and representing a text response to the input data element;
    processing the token output with a decoder network to generate a plurality of reconstructed media tokens (image tokens or sound tokens);
    processing the at least one media input of the input data element using a first media encoder neural network that has been trained to process at least one media input to generate a plurality of media tokens characterizing the at least one media input; and
    modifying the MMLV to reduce a loss function (also called here a "language model loss function") comprising a reconstruction loss term indicative of a discrepancy between at least one of the reconstructed media tokens and at least one of the media tokens.

In one option, the MMLM may have been "pre-trained" to perform the multi-modal task before the training phase described above begins. Thus, the "training phase" mentioned above is a retraining phase, during which a pre-trained MMLM is further trained to improve its grounding on the media input(s) of the input data elements.

Particularly if the MMLM was pre-trained, the decoder network may also have been also trained before the training phase described above begins. That is, there may be decoder training phase, e.g. after the pre-training of the MMLM, of training the decoder network. During the decoder training phase, the decoder network is trained, upon receiving a token output (e.g. generated by the MMLM based on an input data element), to generate media tokens from it which match at least one media token output by the first encoder neural network upon receiving the media input(s) of the (same) input data element.

The input data elements to the MMLM may, in this case be referred to as "training input data elements", the outputs of the MMLM may be referred to as "training token outputs", the corresponding outputs of the decoder model may be called "reconstructed training tokens", the outputs of the first encoder network upon receiving the media input(s) of the training input data elements may be referred to as "training media tokens" (e.g. "training image tokens" or "training sound tokens"). The training of the decoder network may be repeated updates to reduce a prediction loss function and indicative of a reconstruction loss term which is in this case is indicative of a discrepancy between the reconstructed training tokens and at least one of the training media tokens.

Note that in principle, in a variation, the decoder training phase could be performed without a pre-trained MMLM, using a database (described below) of sample input data elements and corresponding sample token outputs, by training the decoder network to generate, from received sample token outputs, media tokens which match at least one media token output by the first encoder neural network upon receiving the corresponding sample input data elements.

Alternatively or additionally to the decoder training phase, the decoder network may be trained during the training phase jointly with the modifying of the MMLM (i.e. with updates to the decoder network being either substantially simultaneous with updates to the MMLM or interleaved with them). The updates to the decoder network may be such as to reduce a prediction loss function comprising the reconstruction loss term.

In other words, the overall training process for the decoder network may include an initial decoder training phase in which there are multiple updates to the decoder network (e.g. to reduce the prediction loss function including the reconstruction loss term) and the pre-trained MMLM (if any) is not updated (it is "frozen"), followed by the training phase in which the MMLM and the decoder network are both trained. Experimentally, it has been found more computationally efficient to perform both a decoder training phase and a training phase in which the MMLM and decoder network are both trained, than to omit the decoder training phase.

The MMLM may be any known MMLM. In one form it is a MMLM which includes a media encoder neural network configured to receive the media input(s) of an input data element to the MMLM, and to generate from them a media encoding vector (e.g. an image encoding vector or a sound encoding vector). This media encoder neural network may be referred to as a "second media encoder neural network", although as described below, in some implementations the second media encoder neural network may comprise the first media encoder neural network.

The MMLM may further include a multi-modal neural network configured to receive the media encoding vector from the second media encoder neural network, and also any input text tokens contained in the (same) input data element. The multi-modal neural network is configured to process these, so as to generate the token output. The input text tokens are typically selected from the same vocabulary as the text tokens of the token output, though in some implementations the vocabularies may be different (e.g. the input text tokens may be selected from the Roman alphabet, and the output tokens may be selected from a Japanese character set, such that the MMLM performs a translation operation, conditioned on the media input(s) of the input data element). The tokens in the vocabulary/vocabularies can be any appropriate text tokens, e.g., words, word pieces, punctuation marks, and so on that represent elements of text in one or more natural languages and, optionally, numbers and other text symbols that are found in a corpus of text. For example, to generate the input text tokens the system can tokenize a given sequence of words by applying a tokenizer, e.g., the SentencePiece tokenizer or another tokenizer, to divide the sequence into tokens from the vocabulary. The vocabulary(-ies) may also include pre-defined tokens labelling positions in input data element, e.g. the input text tokens may include a text token indicating the start/end of a phrase formed by other input text tokens, or indicating that a given input text token is the last input text token of the input data element.

Note that if the input data element contains no input text tokens (e.g. it just contains media input(s)), then the multi-modal neural network may be configured to generate the token output based on the media encoding vector alone, e.g. as a textual description of the content of the media input(s).

In one case, each media input is a sound signal. By a sound signal is meant data encoding a sound waveform during a period of time, such as at least one amplitude value for each of a sequence of times during the period.

In another case, each media input is an image (which may be a still image or a moving image), so that the MMLM is a visual language model (VLM). In this case, each of the media encoder neural networks is an image encoder neural network, configured to generate image tokens, and the reconstructed media tokens are reconstructed image tokens.

The VLM may be any known VLM. In some such systems, e.g. the Flamingo model described in "Flamingo: a Visual Learning Model for Few-Shot Learning", J-B Alayrac et al (2022), https://arxiv.org/pdf/2204.14198.pdf, the multi-modal neural network, comprises a trained language model comprising a plurality of token processing layers and trained to perform a language modeling task on an input made up of (e.g. consisting of) tokens from the vocabulary to generate an output, the trained language model being arranged to receive the one or more input text tokens of the input data element. The trained language model is a large language model (LLM) which has been trained on a database of text inputs (selected from a first vocabulary, i.e. the vocabulary of the input text tokens) and corresponding text outputs (selected from a second vocabulary, i.e. the vocabulary of the text tokens of the token output, which may be the same as the first vocabulary). In an example, the plurality of layers of the trained language model may apply a self-attention operation to their respective inputs. The trained language model may apply relative positional encodings to the input text tokens prior to processing them by the plurality of layers.

The multi-modal neural network may (as in the Flamingo model) further include at least one modification layer interleaved with the plurality of token processing layers of the trained language model, so that there is a stack of the interleaved layers, with the output of each layer, except the last, being passed to the next layer of the stack. A first layer of the trained language model may be configured to receive any text tokens of the input data element to the VLM. The modification layer(s) are arranged to receive the image encoding vector from the second image encoder neural network (e.g. each modification layer may receive the whole image encoding vector, or different ones of the modification layer received different corresponding portions of the image encoding vector). Based on the image encoding vector, the modification layer(s) modify data flowing through the trained language model, and thereby modify the output of the trained language model to be different from the output which the trained language model would produce from the text tokens of the input data element in the absence of the modification layer(s). Thus, due to the modification layer(s), the output of the VLM is conditioned on the image(s) in the input data element to the VLM.

As noted above, the multi-modal language model neural network may be pre-trained (i.e. before the training phase proposed here) to perform the multi-modal task. For example, in the case that the media input is an image, this may be according to a known training algorithm, such as the one used in J-B Alayrac et al (2022). In this case the "training phase" is a re-training phase in which the pre-trained VLM is improved, specifically improving its grounding on input images.

The pre-training may, for example, be performed by repeated updates to the modification layer (and/or to the second media encoder model, though as in J-B Alayrac et al the second media encoder model may be frozen during the training of the multi-modal language model), without modifications to the trained language model. These modifications may be performed using a training database of sample input data elements (one or more images/sound signals and optionally for some or all of the sample input data elements one or more text tokens) and corresponding sample token outputs which represent corresponding text responses to the corresponding sample input data element which successfully perform the multi-modal task.

In both the cases of input images and input sound signals, the modifications in the pre-training of the MMLM are such as to reduce the value of a multi-modal loss function for the multi-modal task that quantifies a difference (e.g. for a batch of sample input data elements) between the token output which is generated by the MMLM upon receiving a sample input data element, and the corresponding sample token output(s) in the training database. For example, the multi-modal loss function may measure respective likelihoods assigned to text tokens of the sample token output by score distributions over the text tokens in the vocabulary of text tokens generated by the trained language model neural network as a result of processing the sample input data element.

Optionally, during the training phase, updates to the MMLM are made to minimize both a language model loss function which is a sum of multiple terms, including both the reconstruction loss term and a term which is based on the multi-modal loss function. For example, a language model loss function may be defined, which is a weighted sum of the reconstruction loss term and a term which is the multi-modal loss function. In this way during the training phase the MMLM may not reduce its capacity to perform the multi-modal task, while generating token outputs which are more based on the media input(s) of the input data elements than before the training phase. In implementations, during the training phase, the modifications are made to the modification layers and/or the second media encoding neural network, and the token processing layers of the trained language model are not changed.

The first (and if separately present second) media encoder neural network, the decoder network, the token processing layers, and the modification layers are each defined by corresponding sets of parameters. The parameters of the first (and optionally second) media encoder neural network(s), the decoder network, and the token processing layers may be frozen during the training phase. The updates to the visual language model neural network during the training phase may be performed by a process which comprises backpropagating gradients of the language model loss function with respect to the parameters of the modification layers and/or the second media encoder neural network, through the trained language model without adjusting parameters of the trained language model. In an implementation, it is only the parameters of the modification layers, and optionally of a resampler unit of the second media encoder neural network, which are modified by the updates in the training phase.

The first media encoder neural network, and if separately present the second media encoder neural network, may take any form. For example, they may include one or more convolutional neural network layers.

In implementations in which the media inputs are sound signals, they may include any known system for embedding a sound signal to form sound features.

In implementations in which the media inputs are images, the first and second media encoder network may include an encoder network for generating spatial features (or spatio-temporal features in the cases of images which are video images).

At least the second media encoder neural network may further include a "resampler" unit for transforming the media features (e.g. sound features or spatial features) to have a desired number of components.

The media encoder(s) may be pre-trained and frozen in the MMLM. For example, the media encoder of the second media encoder neural network may be trained before being incorporated into the MMLM and then not trained as part of the pre-training of the MMLM to perform the multi-modal task, or the (re-)training phase.

In the case of media inputs which are images, as in the Flamingo model, the media encoder (image encoder) of the second media encoder neural network (second image encoder neural network) may be a normalizer-free residual network (NFNet).

Alternatively, the image encoder of the second image encoder neural network may be a vector quantization (VQ) image encoder. A VQ image encoder generates image tokens ("VQ tokens") which are suitable for ("configured for") use by an image generation model for generating an image from the image tokens.

Similarly, the first image encoder neural network may be implemented as, or comprising, a vector quantized (VQ) image encoder

Generally speaking, a VQ image encoder is one which generates image tokens which are index values referencing one of a predefined set of latent vectors. A VQ image encoder may label respective parts (e.g. patches) of an input image by one or more of these index values. The latent vectors themselves may have been learnt in a training procedure. The

One such VQ image encoder is the VQ-VAE (variational autoencoder) proposed by A. van den Oord et al, "Neural Discrete Representation Learning", 2017, arXiv: 1711.00937.

Typically a VAE is an encoder network that receives input data x, and forms a posterior q(z|x) over a set of latent variables z. It is trained in a system further including a prior distribution p(z) of the latents, and a decoder which provides a distribution $p(\mathbf{x}|\mathbf{z})$ over the input data x. In a VQ-VAE, the latents are discrete, rather than being from a continuous distribution. That is, the set of latents is defined by a set of M possible latent vectors $\mathbf{z}_j$, j=1,..., M. The encoder network samples from a distribution which provides integral values used to index the set of latent vectors $\{\mathbf{z}_j\}$ (e.g. for each of a plurality of portions of the input data), and a decoder unit receives the index values and attempts to reconstruct the input data from the index values and the set of latent vectors $\{\mathbf{z}_j\}$.

For example, for each patch of input data x which is an input image, the encoder network may use an embedding network to embed the patch to form an embedding. A vector quantization layer may find the closest corresponding one of the latent vectors $\mathbf{z}_j$ to the embedding, and output the corresponding value $j$. The index values are then passed to the decoder, which reconstructs the patch as $\mathbf{z}_j$, and then performs a decoder operation on the $\mathbf{z}_j$ using a decoding unit which is a further neural work. During the training, parameters defining the encoder network, the values of the latent vectors $\{\mathbf{z}_j\}$, and parameters defining the decoding unit, are iteratively varied to minimize a loss function which includes a reconstruction loss which quantifies the difference between the input data element to the encoder network and the reconstruction generated by the decoder network. The loss function may include further terms, as explained in A. van den Oord et al (2021). Following the training, the encoder network and the vector quantization layer may be used as the first image encoder neural network of the presently proposed system, or as an image encoder of the first and/or second image encoder neural network. In either case, the VQ image encoder generates index values, e.g. for respective parts of the images, which are image tokens.

Another suitable VQ image encoder is a VQ-GAN encoder, as proposed by P. Esser et al, "Taming transformers for high resolution image synthesis", 2021, arXiv:2012.09841. The VQ-GAN encoder is similar to the VQ-VAE encoder but the reconstruction loss is replaced with a perceptual loss, and the VQ image encoder is trained in an adversarial training procedure using a patch-based discriminator to differentiate between real and reconstructed images.

Experiments have shown that implementing the Flamingo model with a VQ image encoder as part of the second image encoder neural network, rather than an NFNet image encoder, is successful. This was a surprising result, since NFNets were developed for image recognition, and they provide significant semantic information, whereas the VQ image encoder is based on encodings which are learnt without a semantic input. It was believed that the greater semantic information available from the NFNet encoder was essential to the operation of the multi-modal network, but the experiments demonstrate that this is not the case.

In fact, in an experiment using a VQ-GAN encoder in place of the NFNet image encoder of the Flamingo model, it was found possible to match the Flamingo performance using only half the computational training steps. Much of this saving was because it was possible to omit the supervised training of the NFNet visual encoder. Furthermore, a VLM using the VQ-GAN encoder matched the performance of a baseline Flamingo model, although the former had 70 million fewer trainable parameters. The training procedure using the VQ-GAN image encoder used only 595,000 steps, vs 1,250,000 steps for training the baseline Flamingo model.

In some implementations, the first media encoder neural network comprises the media encoder of the second neural network. For example, in the case that the media inputs are images, a single VQ image encoder may function as the first image encoder neural network and as an image encoder of the second image encoder neural network, which may for example pass the image features it generates to a resampler unit ("resampler") of the second image encoder neural network.

The task which the decoder network has to perform is a difficult one, not least because input image(s) may contain significant amounts of content which are rarely reflected in token outputs generated by the MMLM. To make the task which the decoder network has to perform easier, the reconstruction loss term may be generated based only on a (proper) subset of the media tokens generated by the first media encoder neural network. In other words, the other media tokens output by the first media encoder neural network may be "masked".

In some implementations, in which the media input(s) of each input data element are sound signal(s), the multi-modal task may be to obtain information, of a type defined by input text tokens of the input data element, from the sound signal(s) of the input data element. For example, the input text tokens may define the multi-modal task as determining the topic of conversation in the sound signal, or determining a regional accent or other characteristics a speaker in the sound signal.

In some implementations, in which the media input(s) of each input data element are images, the multi-modal task is an image captioning task, and the token output for each input data element represents at least a portion of a predicted text caption for the input image(s) of the input data element.

In some implementations, each input data element comprises one or more input text tokens which represent a question about the input image(s) of the input data element, and the token output represents a predicted text answer to the question about the input image.

In some implementations, each input data element comprises a plurality of input images, the one or more input text tokens of each input data element represent a classification of a (proper) subset of the input images of the input data element (i.e. an indication that the content of the subset of input images is in a corresponding one of a set of predetermined categories), and the token output represents a predicted classification for an input image of the input data element other than the subset of the input images. For example, the input data element comprise an image of a cat, an image of a dog, and input text tokens "cat", and the token output may comprise the text tokens "dog".

In some implementations, each input data element comprises a plurality of input images, and one or more input text tokens that represent an answer to a question when asked about a (proper) subset of the input images, and the token output represents a predicted answer to the question when asked about an input image of the input data element other than the subset of the input images. For example, the input data element may comprise an image of a cat, an image of a dog, and input text tokens "miaow", and the token output may comprise the text tokens "woof'.

In some implementations, each input data element comprises a plurality of input images, and one or more input text tokens that provide (i) provide a particular type of information about a (proper) subset of the input images and (ii) a text prompt to provide the particular type of information about an input image of the input data element other than the subset of the input images, and the token output represents the particular type of information about the input image of the input data element other than the subset of the input images. For example, the input data element comprise an image of a cat, input text tokens "a basket", an image of a dog, and input text tokens "where does this live?", and the token output may comprise the text tokens "a kennel".

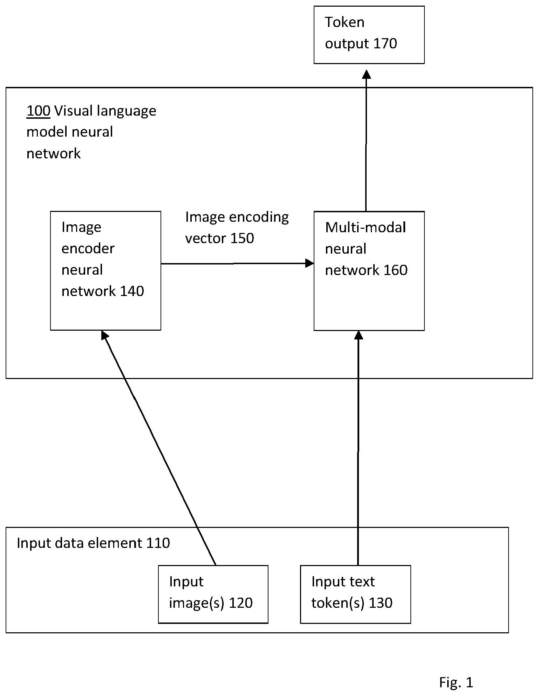

There is a now a discussion of specific examples of the present disclosure with reference to FIGs 1-7. In this discussion it is assumed that the media input of each input data element is an input image, so that the multi-modal neural network is a VLM. However, in a variation discussed below the media input of each input data element is instead an input sound signal.

FIG. 1 is a diagram of an example visual language model neural network (VLM) 100. The VLM 100 is an example of a system implemented as computer programs on one or more computers in one or more locations, in which the systems, components, and techniques described below can be implemented.

The VLM 100 is configured to receive an input data element 110 including one or more input images 120 and one or more input text token(s) 130. The image(s) 120 may be of any form, e.g. still or video images, and may for example be image(s) of a real world environment captured by one or more (still or video) cameras. Each text token is selected from a vocabulary, such as the characters of a natural language. In one example, the vocabulary may be the Roman alphabet.

In some cases, though not necessarily, the input data element 110 includes a plurality of input text tokens 130 forming a string. For example, the string may ask a question relating to the image(s) 120. One of the input text tokens may be a predetermined input text token indicating that it is the last input text token of the string.

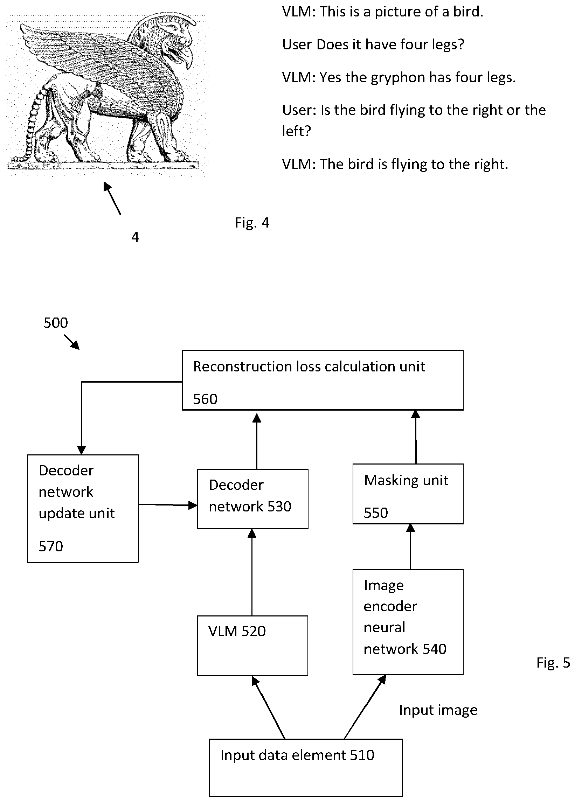

The VLM 100 has been trained, e.g. at least partially by methods described below with reference to FIGS. 5-9, to perform a multi-modal task. The VLM 100 comprises an image encoder neural network 140 (below referred to as a "second image encoder neural network") and a multi-modal neural network 160.

A multi-modal task, as used in this specification, is one that requires processing the input data element 110 to generate a token output 170 that includes a sequence of text tokens selected from a vocabulary. Typically, this is the same vocabulary from which the input text tokens 130 are selected, although in principle it may be a different vocabulary, e.g. the input text token(s) 130 may be selected from first vocabulary (e.g. the Roman alphabet) and the text tokens of the token output 170 may be selected from a second, different vocabulary (e.g. the hiragana, katakana and kanji characters of the Japanese language).

Optionally, the multi-modal neural network 160 receives the input text tokens as a sequence ("input sequence"), e.g. at successive times it receives successive respective strings which are each a consecutive subset of the input text tokens, which each begin from a first of the input text tokens and which are each (except the first string) one input text token longer than the preceding string. Also, at each time (except the first) the string may include any tokens of the token output which the multi-modal neural network 160 generated at previous times.

More specifically, to generate a particular text token of the output token, the multi-modal neural network 160 can process the corresponding string and the image encoding vector 150 to generate a score distribution, e.g., a probability distribution, that assigns a respective score, e.g., a respective probability, to each token in the second vocabulary. The multi-modal neural network 160 can then select, as the particular text token of the token output 170, a text token from the second vocabulary using the score distribution. For example, the multi-modal neural network 160 can greedily select the highest-scoring token or can sample, e.g., using nucleus sampling or another sampling technique, a token from the distribution.

The multi-modal neural network 160 may apply relative position encodings to the input text tokens of one or more of the strings prior to processing the string using the plurality of layers. Applying relative positional encodings refers to obtaining an embedding of each input text token of the string based on the position of the token in the string.

Examples of multi-modal tasks are described in more detail below.

The image encoder neural network 140 is a neural network that is configured to receive an image 120 and to process the image 120, e.g., to process the intensity values of each of one or more colors of the pixels of the image, to generate an image encoding vector 150 characterizing the image 120. If the input data element 110 includes multiple images 120, the image encoder neural network 140 may be configured to receive them sequentially, and to generate a respective image encoding vector 150 for each of the images.

An "encoding vector," as used in this specification is a vector of numeric values, e.g., floating point or other type of numeric values, that typically has a predetermined dimensionality, e.g., has a predetermined number of values. In some cases, the image encoding vector may comprise a sequence of "embeddings" for different respective portions of the images. If one of the image(s) is a video image, the respective imaging encoding vector 150 may optionally have a structure which includes sections for each frame, or for each group of frames, of the video image.

The image encoder neural network 140 can generally have any appropriate architecture that maps the input image to an image encoding vector 150.

For example, the image encoder neural network 140 can include a convolutional neural network. As a particular example, the convolutional neural network can be configured to process the input image 120 to generate an output tensor characterizing the input image, and the image encoder neural network 140 can be configured to map the output tensor to the image encoding vector. That is, the image encoder neural network 140 can include (i) the convolutional neural network and (ii) an additional component that maps the output tensor to the image sequence. For example, the additional component can apply a linear transformation to linearly map the output tensor to $D * n$ channels, and then reshape the result as a sequence of $n$ embeddings, each with dimensionality $D$.

Further examples of possible image encoder neural networks are given below.

The image encoding vector(s) corresponding to the input image(s) 120 are input to the multi-modal neural network 160 which also receives the input text token(s) 130. The multi-modal neural network 160 is a neural network that is configured to receive as input the image encoding vector(s) 150 and the input text token(s) 130 (if any) and to process the input to generate the token output 170.

In some examples, the input images 120 may not all be of the same format (e.g. at least one may be a still image and at least one may be a video image). In this case, a plurality of image encoder neural networks 140 may be provided for each corresponding format, for processing input images 120 of the corresponding format, to generate image encoding vectors 150. The image encoding vectors produced by each of the image encoder neural networks 140 may be have the same number of components.

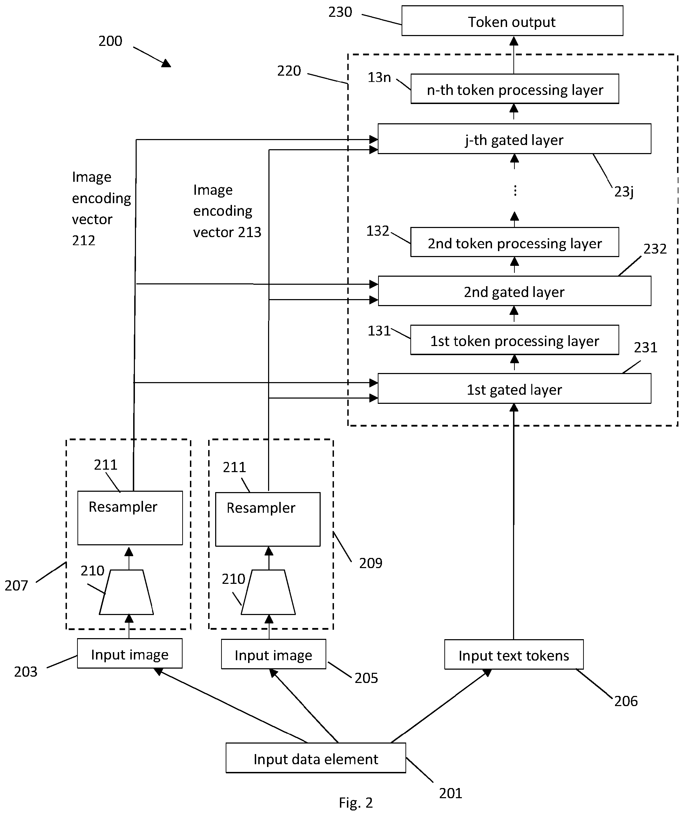

Turning to FIG. 2, the structure of one example of a VLM 200 as shown in FIG. 1 is illustrated in more detail. This is the Flamingo model described in J-B Alayrac et al (2022)/

The VML 200 is configured to receive as an input an input data element 201 which includes one or more input images 203, 205 and input text tokens 206 (an input token string). In one case, illustrated in FIG. 2, the input data element 201 may contain two input images 203, 205. However, it is to be understood that there may be any number of one or more input images(s) in each input data element 201.

The VLM 200 extracts the two input images 203, 205 from the input data element 201, and processes each input image using an image encoder neural network, to generate a respective image encoding vector 212, 213. As illustrated in FIG. 2, the VLM 200 contains two image encoder neural network 207, 209, but alternatively, in the case that the two input images 203, 205 have the same format, there may be only a single image encoder neural network which in turn receives the input images 203, 205, and generates a corresponding image encoding vector 212, 213 from each input image 203, 205 in turn. That is, the reference numerals 207, 209 may signify the same image encoder neural network at two different times.

More generally, if there are multiple input images in the input data element 201, and if they have different corresponding formats, an image encoder neural network may be provided for each corresponding format, and each image encoder neural network is configured to receive the input image(s) of the corresponding modality (e.g. sequentially if there are multiple data items of the corresponding modality in the query input). For example, the image encoder neural network 207 may be configured to receive data item(s) of the input data element 201 which are a single image (e.g. still image), and the image encoder neural network 209 may be configured to receive data item(s) of the query input which are a video (e.g. a sequence).

Each of the image encoder neural networks 207, 209 may comprise a pre-trained image encoder (a neural network) 210, and a compressed representation generation system in the form of a respective "resampler" unit 211.

In J-B Alayrac et al (2022), each of the image encoders 210 was a pretrained and frozen Normalizer-Free Residual Network (NFNet) (A. Brock, et al, "High-performance large-scale image recognition without normalization", arXiv: 2102.06171, 2021). The image encoders 210 were trained using a contrastive objective of datasets of image and text pairs, using a two-term contrastive loss (Radford et al., "Learning Transferable visual models from natural language supervision", arXiv:2103.00020. 2021). In the case of still images, the image encoder 210 generates a 2D spatial grid of features, and flattens it to a 1D sequence. For video images, the image encoder 210 samples the frames and encodes them independently to obtain a 3D spatio-temporal grid of features to which learned temporal embeddings are added. The features are then flattened to 1D.

J-B Alayrac et al (2022) proposes a structure for the resampler 211 based on a "perceiver" as described in "Perceiver: General Perception with iterative attention", A. Jaegle et al, 2021. The resamplers 211 take as input a variable number of image or video features (spatial features or spatio-temporal features in the case that the input image(s) are video images) produced by the corresponding image encoder 210 from input images (e.g. having different respective formats), and produce an image encoding vector 212, 213 as a compressed representation of the corresponding input image and having a fixed number of components (e.g. visual outputs).

The VLM 200 further includes a multi-modal neural network 220. This comprises a stack of layers including a number $n$ of token processing layers 131, 132, ..., 13n interleaved by a number j of modification layers in the form of gated cross-attention layers 231, 232, ...., 23j. The number $j$ of gated cross-attention layers may be equal to the number $n$ of token processing layers, but in variations $n$ and $j$ may be different from each other, e.g. such that there may be any number of token processing layers between any given pair of gate cross-attention layers and vice versa.

The token processing layers 131, 132, ..., 13n may have been trained together (without the gated cross-attention layers 231, 232, ...., 23j) as a stack of layers which operates as a trained language model. That is, the token processing layers were trained as a stack (in the same order as in FIG. 2) in which a first of the token processing layers 131 received a (text) input composed of text tokens from a vocabulary, each other token processing layer received the output of the preceding token processing layer, and the last token processing layer 13n generated an output composed of text tokens from a vocabulary (normally, the same vocabulary, but optionally, as mentioned above the input could be text token from a first vocabulary, and the output could be text tokens from a different, second vocabulary). The token processing layers 131, 132, ..., 13n were trained, e.g. by any known large language model training algorithms such as using a maximum-likelihood objective, on a large database of text, e.g. natural language text that is publically available from the Internet or another text corpus, such that upon an input token string (sequence of tokens from the vocabulary) being input to the first token processing layer 131, the output token string generated by the last token processing layer 13n is an appropriate response. For example, if the input token string is a question, the output token string may be an appropriate answer. The trained language model may, for example, be the Chinchilla model of "Training compute-optimal large language models", J. Hoffmann et al, 2022, or the trained language model of Brown et al, "Language models are few-shot learners", in Conference on Neural Information Processing Systems, 2020.

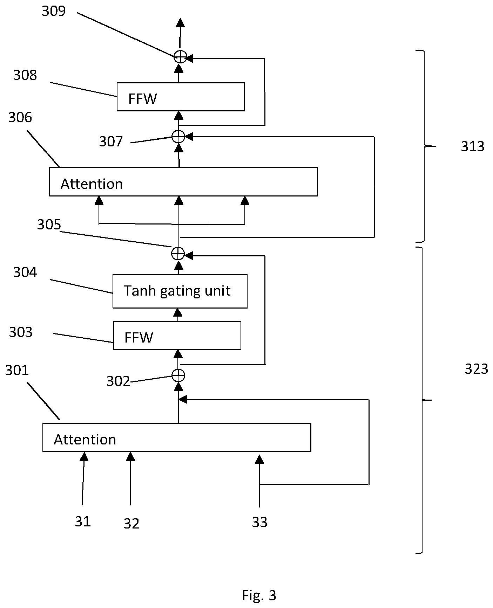

FIG. 3 shows the structure of two consecutive layers 323, 313 of the multi-modal neural network 220 of FIG. 2. The layer 323 is a gated cross-attention layer which is one of the modification layers 231, 232, ..., 23j. The layer 313 is one of the token processing layers 131, 132, ..., 13n.

The gated cross-attention layer 323 receives image encoding vectors 31, 32 (compressed representations) from respective ones of the image encoder neural networks 207, 209. It further receives a vector which is a language input 33, and which may be denoted $y$. If the gated cross-attention layer 323 is the first layer of the stack, the language input 33 is typically the input text tokens, or a subset of them. Otherwise the language input 33 to the gated cross-attention layer 323 is the output from a preceding layer of the multi-modal neural network 220.

The gated cross-attention layer 323 applies an attention function 301 over the inputs 31, 32, 33, such as a query-key-value (QKV) attention operation. For example, the vision inputs 31, 32 may define key and value vectors, and a query vector is defined based on the language input 33. In general, an attention operation can be one that applies an attention mechanism to elements of an embedding to update each element of the embedding, e.g. where input embeddings are used to determine a query vector and a set of key-value vector pairs, and the updated embedding comprises a weighted sum of the values, weighted by a similarity function of the query to each respective key.

There are many different possible attention operations. Some examples of transformer blocks including attention operations, are described in Vaswani et al. "Attention is all you need", 31st Conference on Neural Information Processing Systems (NIPS 2017), Long Beach, CA, USA.

Some attention operation may map a query and a set of key-value pairs to an output, where the query, keys, and values are all vectors. The output is computed as a weighted sum of the values, where the weight assigned to each value is computed by a compatibility function, e.g. a dot product or scaled dot product, of the query with the corresponding key.

In some implementations the attention operation is configured to apply each of a query transformation e.g. defined by a query matrix $W^Q$, a key transformation e.g. defined by a key matrix $W^K$, and a value transformation e.g. defined by a value matrix $W^V$, to two attention layer inputs: a matrix X of input data (e.g. where each row may be the input data 33 for a respective one of the input text tokens of the input data element) and a matrix Y of input data (e.g. derived from the inputs 31, 32) to the attention layer, to derive a query matrix (formed of query vectors) $Q = XW^Q$, a key matrix (form of key vectors) $K = YW^K$, and value matrix (forms of value vectors) $V = YW^V$, which are used to determine an attended sequence for the output. For example the attention operation may be a dot product attention operation applied by applying each query vector to each key vector to determine respective weights for each value vector, then combining the value vectors using the respective weights to determine the attention layer output for each element of the input sequence. The attention layer output may be scaled by a scaling factor e.g. by the square root of the dimensions of the queries and keys, to implement scaled dot product attention. Thus, for example, an output of the attention operation may be determined as

$$softmax\left(\frac{QK^T}{\sqrt{d}}\right)\mathbf{V}$$

where d is a dimension of the key vector and the query vector (and in some implementations the value vector). A summation over the value vectors included in V is assumed here, weighted by the respective values $softmax\left(\frac{QK^T}{\sqrt{d}}\right)\mathbf{V}$. In another implementation the attention operation can comprise an "additive attention" mechanism that computes the compatibility function using a feedforward network with a hidden layer. As previously mentioned, the output of the attention operation may be further processed by one or more fully-connected, feed forward neural network layers.

The attention operation may implement multi-head attention, that is, it may apply multiple different attention operations in parallel. The outputs of these may then be combined, e.g. concatenated, with a learned linear transformation applied to reduce to the original dimensionality if necessary.

The output of the attention function 301 is added to the language input 33 by the addition unit 302. The result, denoted y, is then input to a FFW network 303, such as a multi-layer perceptron. The output of the FFW network 303 is a vector which may be denoted x. This is input to a tanh gating unit 304 which applies a component-wise operation in which each component is multiplied by a gating parameter $\alpha$, and a tanh function is applied to the result. The output of the FFW network 304 is added to its input by the addition unit 305. This produces the output of the gated cross-attention layer 323, which may be written as $y + tanh(\alpha x)$.

The token processing layer 313 includes a self-attention layer 306. The attention layer operates on key vector, value vector and query vectors generated from the input to the token processing layer 313. The self-attention operation may apply the attention operation explained above, except that the matrix of data input $X$ plays the role of matrix Y also. The output of the self-attention layer 306 is added to its input by an addition unit 307, and the result is fed to a feedforward (e.g. multi-layer perceptron) layer 308. The output of the FFW network 308 is added to the input of the FFW network 308 by the addition unit 309. This produces the output of the token processing layer 313.

Note that if the gating parameter $\alpha$ is near zero, the output of the gated cross-attention layer 323 is very close to the language input 33, so the VLM 200 performs almost the same function as the trained language model. However, in use (i.e. after the VLM 200 has been trained) the value of the gating parameter $\alpha$ is significantly higher than zero, so that the image encoding vectors (vision inputs) 31, 32 affect the output of the gated cross-attention layer 323, and thereby affect the output of the token processing layer 313.

Returning to FIG. 2, the image encoding vectors 212, 213 output from the resamplers 211 are used as control inputs to the gated cross-attention layers 231, 232, ..., 23j. For example, each image encoding vector 212 may be, e.g. for each of a number patches of the image, the different (learned) latent vector, resampled by the corresponding resampler 211, to generate the control input for a corresponding one of the gated cross-attention layers 231, 232, ..., 23j, or a single (e.g. larger) resampled latent vector may be used to generate the control inputs for all the gated cross-attention layers 231, 232, ..., 23j at once.

The input text tokens 206 are used as a prompt input for the multi-modal neural network 220, and are supplied to the first processing layer of the stack, which may be the 1st gated cross-attention layer 231. Data passes (upwardly in FIG. 2) through the multi-modal neural network 220, to produce a token output 230 (output token string), which is the output of the multi-modal neural network 220.

The system 200 can also include a text embedder (not shown), which is an embedding function that independently transforms each token in the vocabulary of tokens to a respective text embedding that has the same dimensionality as the input embeddings. The text embeddings can be fixed, e.g., pre-determined, or can be learned during the training of the language model neural network. The text embedder may be configured to receive the input text tokens 206 and process them before supplying them to the first layer of the multi-modal network 220.

The training method proposed in J-B Alayrac et al (2022) is briefly as follows. The language model (i.e. the set of layers 131, 132, ..., 132n), the image encoder models 210, and the perceiver resampler 211 are trained separately, and then "frozen", i.e. no further changes are made to these networks. The VLM 200 is then constructed, including interleaving the gated layers 231, 232, ..., 23n with the token processing layers 131, 132, 13n. A training procedure is then carried out in which (only) the gated layers 231, 232, ...23n, are trained, based on a database of multi-modal training examples (pairs of sample input data elements 201 and corresponding sample token outputs 230 representing a text response to the corresponding input data element according to the multi-modal task).

Following the training, the VLM 200 may be used to perform the multi-modal task. Even when the image encoder neural network 140 is only trained for a single multi-modal task, the VLM 200 can perform multiple different multi-modal tasks after training, because the trained language model can typically perform a range of text-processing tasks.

The input data element may be generated in an iterative manner. For example, following the generation of a token output 230 by the VLM 200 based on an input data element 203, a user may generate a new input data element 201 by adding to the previous input data element 201 the token output 230 and further text tokens chosen by the user representing an answer to the token output. The new input data element 201 is input to the VLM 200, to generate a new token output 230, which is a response to the text tokens chosen by the user, in the context of the rest of the new input data element 201. In this way, a dialogue may be carried out with the VLM.

Although this VLM is successful, it and other VLMs suffer from a number of weaknesses. A first of these is "hallucinations" in which the token output claims that a given input image contains content which in fact it does not. A second weakness is that in different parts of a dialogue the VLM may interpret the input image(s) differently, so that later parts of the dialogue contradict earlier parts of the dialogue. A third weakness is that the VLM may be misled by the input text tokens to misinterpret features in the input image(s).

For example, FIG. 4 shows a possible dialogue with a VLM (e.g. the VLM 100 as shown in FIG. 1). Initially, the input data element 110 is just the image 4 (in this case, an image of a "gryphon"). The corresponding first token output 170 generated by the VLM 100 is "This is picture of a bird". Here, the VLM has hallucinated a bird, where there is none in the picture. The user forms a new input data element 100 including the image 4 and the first token output 170, and new text tokens reading "Does it have four legs". The corresponding second token output 170 is "yes the gryphon has four legs". This contradicts the interpretation of the image given in the first token output 170. The user forms a new input data element 100 by adding the second token output 170 to the previous input data element 100 and also adding text tokens reading "Is the bird flying to the right or the left". The VLM generates a corresponding third token output 170 "The bird is flying to the right". This contradicts the interpretation of the image given in the second token output, and furthermore contains the word "flying" which was suggested by the user's second set of added text tokens. In other words, the user's text tokens confused the VLM 200 into misinterpreting the image as a being of a flying bird ("suggestibility").

Turning to FIG. 5, a system is shown for training a decoder network for use in a training process for a VLM (e.g. a re-training process of a VLM which has already been trained to produce an improved VLM). This is done using a database of training input data elements 510, which each include one or more image(s). Successive training input data elements 510 are input to a pre-trained VLM 520 to generate corresponding token outputs ("training token outputs"). The image(s) from the training input data elements 510 are input to an image encoder neural network 540 (e.g. a VQ image encoder as described above) to generate corresponding sets of image tokens ("training image tokens"). Certain ones of the each set of training image tokens are masked (removed from the set of image tokens) by a masking unit 550, to produce corresponding sets of masked image tokens.

The decoder network 530 is then trained to receive the training token outputs from the VLM 520 and generate from them corresponding sets of "reconstructed image tokens" which are as close as possible to the corresponding set of masked training image tokens. This is done iteratively by any conventional supervised learning process.

For example, in each iteration, a reconstruction loss calculation unit 560 may calculate the value of a prediction loss function which depends on parameters defining the decoder network 530. The prediction loss function is a sum of one or more terms, including a reconstruction loss term which, for a given input data element, is the number of reconstructed image tokens (produced by the VLM 520 and the decoder network 530 from the input data element) which are different from the corresponding masked image tokens (produced by the image encoder neural network 540 and the masking unit 550 from the image(s) in the input data element). This prediction loss function may be averaged over a plurality of input data elements. A decoder network update unit 570 then modifies the parameters of the decoder network 530 to reduce the value of the prediction loss function. This may be performed on a batch basis, e.g. using a batch of input data elements to produce each update to the parameters of the decoder network 530. Optionally, the prediction loss function may include one or more further terms, for example a term used for normalisation of the parameters of the decoder network 530.

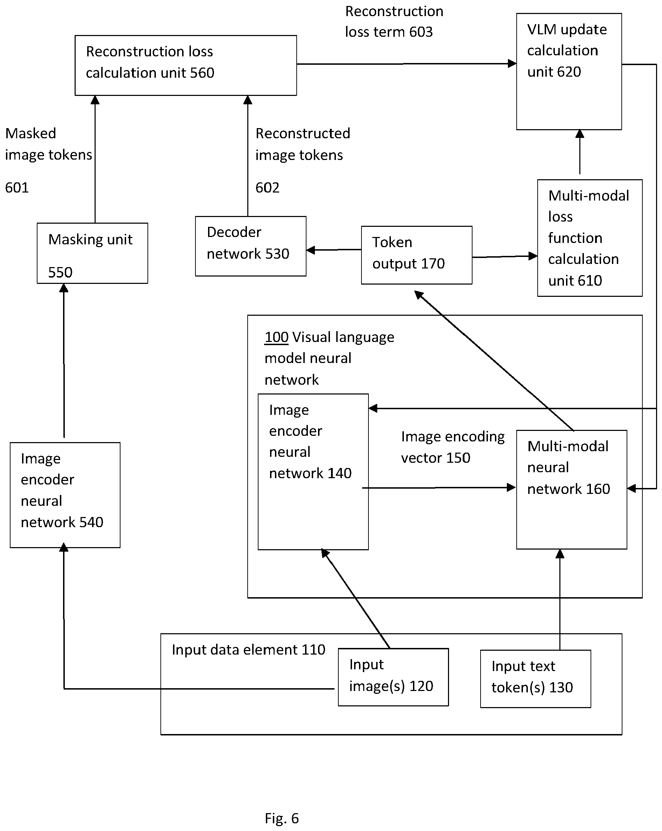

The VLM 100 of FIG. 1 (which is optionally the VLM 200 of FIG. 2) may be trained (or retrained) within the system shown in FIG. 6. This system is an example of a system implemented as computer programs on one or more computers in one or more locations.

The system performs a training phase of the VLM iteratively. In each iteration, an input data element 110 (which may be a sample input data element from the database of multi-modal training examples) is input to the VLM 100 (e.g. as explained above with respect to FIG. 1) to produce a corresponding token output 170. The token output 170 is processed by the decoder network 530, to generate a plurality of reconstructed image tokens 602.

The input image(s) 120 of the input data element 110 are also input to the image encoder neural network 540 (here referred to as a "first image encoder neural network" to distinguish it from the "second" image encoder neural network 140 which is a component of the VLM 100), to generate a plurality of image tokens characterizing the input image(s). Some of the plurality of image tokens produced by the first image encoder neural network 540 are optionally masked by the masking unit 550, and the remainder are passed, as a set of masked image tokens 601, to the reconstruction loss calculation unit, which calculates a reconstruction loss term 603 indicative of the discrepancy (if any) between the reconstructed image tokens 602 output by the decoder network 530, and the masked image tokens 601 output by the masking unit 550.

Optionally, in cases where the input data element 110 is a sample input data element from the database of multi-modal training examples, a multi-modal loss function calculation unit 610 may compare the token output 170 with sample token output in the database corresponding to the sample input data element, and calculate a value of a multi-modal loss function indicative of any discrepancy between the token output 170 and the sample token output, as during the pre-training of the VLM 100.

Note that if the VLM 100 is pre-trained to perform the multi-modal task, the calculation of the value of the multi-model loss function may in principle be omitted, because provided the training phase is short, it will not make the VLM 100 much less effective at the multi-modal task.

A VLM update calculation unit 620 receives the reconstruction loss term 603 and the value (if any) of the multi-modal loss function from the multi-modal loss function calculation unit 610, and obtains a language model loss function comprising the reconstruction loss term. For example, the language model loss function may be a weighted sum of the reconstruction loss term 603 generated by the reconstruction loss calculation unit 560 and the value of the multi-modal loss function (if any) calculated by the multi-modal loss function calculation unit 610. If the weighting of the reconstruction loss term 603 is higher, the grounding of the VLM on the input image(s) is given higher priority compared to performing the multi-modal task. In other words, the responses defined by the token outputs 170 may be less rich textually, but misinterpretation of the input image(s) is reduced.

The VLM update calculation unit 620 makes an update to the parameters of the multi-modal neural network 160 and/or the parameters of a resampler (if any) of the second image encoder neural network 140, to reduce the language model loss function. If the VLM 100 is the VLM 200 of FIG. 2, then the update to the multi-modal neural network 220 of the VLM 200 is performed as an update to one or more of the gated layers 231, 232, ..., 23j, preferably without modifying the token processing layers 131, 132, ..., 13n of the multi-modal neural network 220.

Optionally the VLM update calculation unit 620 makes an update (not shown) to the decoder network 530 to reduce a prediction loss function of the parameters of the decoder network 530, comprising (or equal to) the reconstruction loss term. Thus, optionally the decoder network 530 is further trained during the (re-)training process of the VLM.

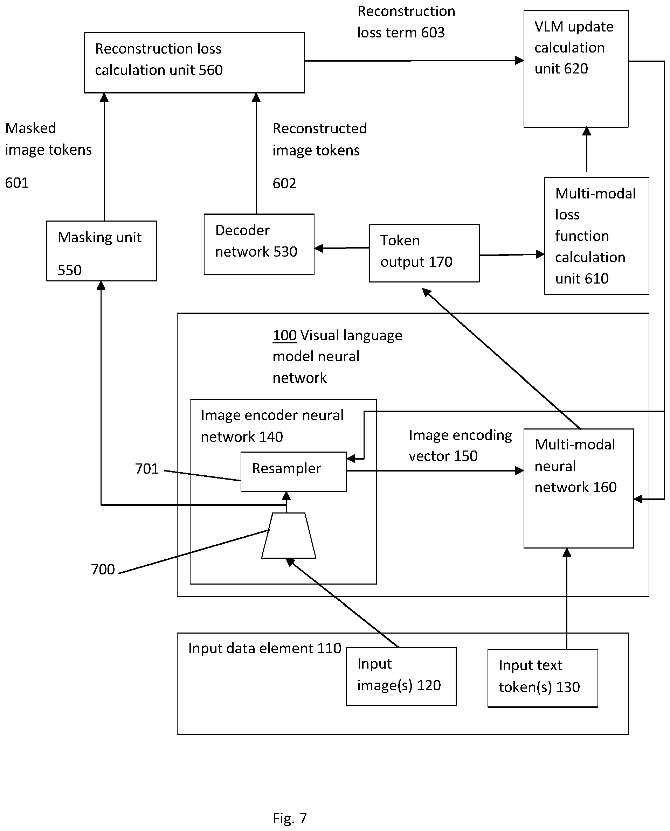

FIG. 7 is a further example of a system implemented as computer programs on one or more computers in one or more locations. The system of FIG. 7 is a variation of the system of FIG. 6, with the difference that a single image encoder 700 (e.g. a VQ image encoder) replaces the first image encoder neural network 540 and the image encoder of the second image encoder neural network 140. In other words, the same image tokens generated by the image encoder 700 from the input image(s) of a given input data element, are input both to the masking unit 550 and the resampler 701, which may again be a perceiver resampler. In all other respects, the operation of the system of FIG. 7 is the same as that of the system of FIG. 6.

An advantage of the arrangement of FIG. 7, using a VQ image encoder as the image encoder 700, over that of FIG. 6, is that a VQ image encoder is likely to produce the very similar image tokens from two images having similar content. This makes the task of the decoder easier. In fact, VQ tokens may be generated in a substantially lossless way, which means the original image can be reconstructed from the VQ tokens substantially perfectly, unlike for NFNET encoders. VQ tokens can be used to reconstruct the image with very low computing cost, by employing parallel decoding as in "MaskGIT: Masked Generative Image Transformer", H. Chang et al, 2022, https://arxiv.org/abs/2202.04200.

Another advantage of using a VQ encoder is that it can be used in a case in which, from a first input image 120 (a "base" input image), one or more modified input images 120 are generated by modifications to the base input image (e.g. the base input image 120 may be an image of a cat, and one or the modified input images may show the same cat but wearing an added hat). The base input image 120 and the modified input image(s) 120 are used to form corresponding input data elements 110, which are used in the training phase of the VLM 100. Specifically, in the training phase of the VLM 100, the input data elements 110 corresponding to the first input image 120 are used in respective updates to the decoder network 530 and/or VLM 100 (e.g. interleaved with updates using other input data elements 110). For each of the input data elements 110, the image encoder neural network 140 generates the same VQ tokens from the portions of the first input image and modified image(s) which are the same. In other words, the VQ tokens for these parts of the first input image and the modified image(s) are consistent for different ones of the input data elements 110. This makes it easier for the decoder network 530 to learn to generate reconstructed image tokens 602 which resemble the VQ tokens generated by the image encoder neural network 140 based on the input data elements.

Note that in the variation discussed above in which the input images 110 of each input data element 110 are replaced by input sound signals, the image encoder neural networks 140, 540 in FIGS. 6 and 7 are replaced by media encoder neural networks which are sound encoder neural networks. Specifically, in the case of FIG. 6, a sound encoder neural network replaces the image encoder neural network 540 in Fig. 6, and is configured to produce media tokens which are sound tokens; and a sound encoder neural network replaces the image encoder neural network 140, and is configured to produce a media encoding vector which is a sound encoding vector, and which is transmitted to the multi-modal neural network 160. In the case of FIG. 7, a media encoder which is a sound encoder replaces the image encoder 700, and is configured to produce media tokens which are sound tokens; thus, the image encoder neural network 140 is replaced by a media encoder neural network which is a sound encoder neural network, and which generates a media encoding vector which is a sound encoding vector.

In this variation, other elements of the examples of FIGS. 6-7 work in the manner explained above. Thus, the masking unit 550 in this variation masks a proper subset of the media tokens (i.e. sound tokens) generated by the first sound encoder neural network, to form masked media tokens (i.e. masked sound tokens). The decoder network 602 is in this case configured to generate reconstructed media tokens which are sound tokens. The reconstruction loss calculation unit 560 receives the masked sound tokens and reconstructed sound tokens, and obtains the reconstruction loss term 603 based on the discrepancy between them.

Further variations are possible in which the input data element includes both input image(s) and input sound signal(s), which are processed respectively by an image encoding neural network or a sound encoding neural network, to generate respective image encoding vector(s) and sound encoding vector(s), which may be used together (e.g. concatenated) in place of the image encoding vector of the examples described below.

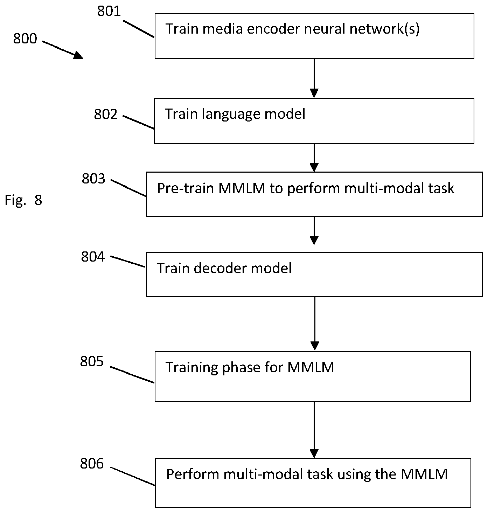

Turning to FIG. 8, the steps of a method 800 of generating a MMLM (such as a VLM in the case of media inputs which are images), are shown.

In step 801, a first media encoder neural network is obtained. If the MMLM includes a second media encoder neural network this is obtained also. The first and/or second media encoder neural networks may be obtained using one of the known methods described above. Each of the first and second media encoder neural networks is defined by a respective set of parameters, e.g. defining weights used in a plurality of neural network layers, and obtaining the first and/or second neural networks includes iteratively training the parameters. The first media encoder neural network is configured to process media inputs to generate a plurality of media tokens characterizing the at least one media input.

As mentioned, obtaining the second media encoder neural network may comprise obtaining a resampler such as a resampler perceiver, having a function defined by a plurality of parameters trained in step 801. The second media encoder neural network further includes a media encoder, which may be configured to receive media inputs to the second media encoder neural network, and generate an output which is passed to the resampler. The resampler generates a media encoding vector which is the output of the media encoder of the second media encoding neural network. As noted above, the media encoder of the second media encoding neural network may be, or be included in, the first media encoder neural network.

In step 802, a language model is trained, such as one including a plurality of token processing layers. This may be done using any known large language model learning algorithm. Generally, it comprises iteratively training a plurality of parameters defining the function of the language model.

In step 803, a MMLM is constructed using the trained language model. The MMLM may comprise a multi-modal neural network formed using the training language model, and the second media encoder model. The multi-modal neural network may be constructed by interleaving the token processing layers of the trained language model with modification layers which receive media encoding vector(s) from the second media encoder neural network, and modify the output of the training language model upon receiving input text tokens in a way which is conditioned on the media input(s) used to generate the media encoding vector(s). The modification layers are defined by a respective plurality of parameters.

Step 803 may include a "pre-training phase" of training the MMLM by iteratively modifying the parameters of the modification layers (and optionally the parameters defining other elements of the MMLM, such as the parameters defining the resampler). The parameters of the trained language model may be frozen during this process. Optionally, the media encoder of the second media encoding neural network may also be frozen during this process.

The pre-training phase may employ a database of sample input data elements (image(s)/sound signal(s), and optionally input text tokens), and corresponding sample token outputs. The modifications to the MMLM are such as to reduce the value of a multi-modal loss function for the multi-modal task that quantifies a difference (e.g. for a batch of sample input data elements) between the token output which is generated by the MMLM upon receiving a sample input data element, and the corresponding sample token output in the training database.

Note that steps 801-803 may be performed in any order. Indeed, they may be replaced by a step of obtaining a trained first encoder neural network and/or a pre-trained MMLM from another source.

Step 804 is a decoder training phase in which a decoder network is trained, upon receiving a token output (a "training token output") generated by the pre-trained MMLM from an input data element (a "decoder training input data element"), to generate reconstructed media tokens ("reconstructed training tokens") which match media tokens ("training tokens") generated by the first media encoder neural network from the media input(s) in the input data element. This training may be performed by iteratively minimizing, with respect to a plurality of parameters defining the decoder network, a prediction loss function including a reconstruction loss term indicative of a discrepancy between the reconstructed training tokens and at least one of the training tokens (unmasked training tokens). The MMLM is frozen during the decoder training phase.

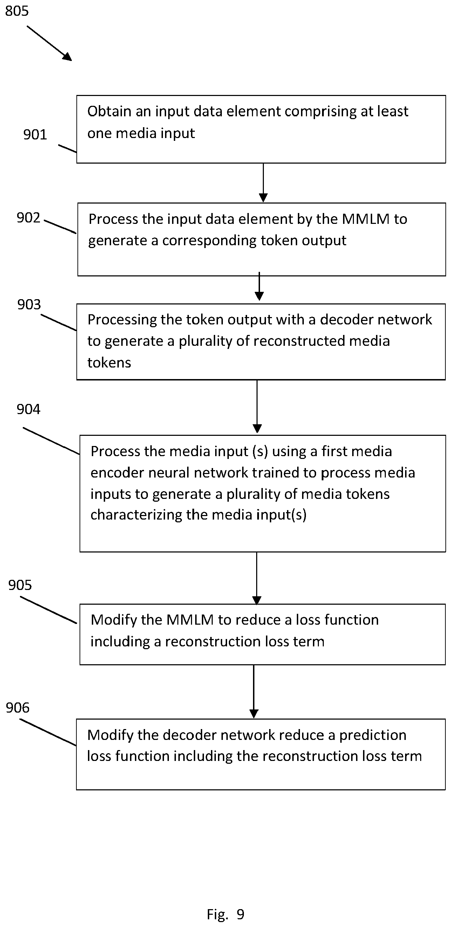

Step 805 is a retraining phase, in which the pre-trained MMLM is retrained in an iterative process which is performed multiple times. Sub-steps of each iteration are shown in FIG. 9.

In sub-step 901, an input data element is obtained comprising at least one media input (i.e. an image or a sound signal) and optionally also one or more text tokens selected from a vocabulary. The input data element may be a sample input data element selected from a training database of pairs of sample input data elements and corresponding sample token outputs.

In sub-step 902, the input data element is processed by the MMLM to generate a corresponding token output comprising one or more text tokens selected from a vocabulary (e.g. the same vocabulary as the text tokens of the input data element) and representing a text response to the input data element.

In sub-step 903, the token output is processed by the decoder network, to generate a plurality of reconstructed media tokens.

In sub-step 904, the media input(s) in the input data element are processed using the first media encoder network, to generate media tokens characterizing the media input(s). Optionally, in this step some of the generated media tokens may be masked (e.g. discarded) to leave a set of masked media tokens.

In sub-step 905, an update is made to the MMLM, modifying it so as to reduce a language model loss function which is a sum of one or more terms including a reconstruction loss term. The reconstruction loss term is indicative of a discrepancy between the reconstructed media tokens generated in sub-step 903, and the (e.g. masked) media tokens generated in sub-step 904. The language model loss function may optionally contain other term(s). For example, it may contain the value of a multi-modal loss function for the multi-modal task. The value of the multi-modal loss function may characterize the difference between the token output generated in sub-step 902 and the sample token output corresponding to the sample input data element. In some cases, a final layer of the MMLM generates a distribution over possible tokens (the token output being selected according to the distribution), and the multi-modal loss function may be inversely related to the probability of the sample token output according to the distribution.

The update in sub-step 905 may be to the parameters defining one or more of the modification layers of the multi-modal level. Alternatively or additionally, the updates may be to the parameters of the resampler of the MMLM. In either case, gradients of the language model loss function with respect to the parameters of the modification layer and/or the resampler may be back-propagated through the token processing layers.

Optionally, one or more (or all) of the iterations in step 805 may contain a further step 906 of updating the plurality of parameters defining the decoder network, by backpropagation, to reduce a prediction loss function including the reconstruction loss term (indicative of a discrepancy between the reconstructed training tokens generated in sub-step 903 and the (e.g. masked) training tokens generated in sub-step 904.

Returning to FIG. 8, once the MMLM has been retrained it may be used to perform the multi-modal task on new input data elements (step 806).

Note that a number of variations to the method 800 are possible.

Firstly, the decoder training stage (step 804) may be omitted. That is, the only training of the decoder network may be during the retraining phase (step 805).

Secondly, if step 804 is omitted, the pre-training phase in step 803 may also be omitted. That is, the only training of the MMLM to perform the multi-modal task may be the training phase (step 805) based on the language model loss function including the reconstruction loss term.

The subject matter described in this specification can be implemented in particular embodiments so as to realize the advantage that hallucination, contradiction and suggestibility are all made less common, because each of them would cause the reconstruction loss term to be higher. In the training phase (optionally called a re-training phase if there is a pre-training phase), the MMLM is modified to reduce the reconstruction loss term. In other words, there is an additional penalty for hallucinations, contradictions and suggestibility, so that these are reduced by adapting the MMLM to minimize the penalty.

The trained MMLM resulting from method 800 of FIG. 8 (e.g. the VLM 100) has a number of technical applications.

For example, in the case that the media inputs are sound signals, the sound signal(s) of an input data element may be sound signal(s) captured by a microphone, and the token output may be text describing the content of the sound signal(s). For example, a characteristic of the speaker and/or the content of speech encoded by the sound signal(s).

Alternatively, in the case that the media inputs are images, the image(s) 120 of an input data element 110 may be image(s) of the real world captured by a camera, and the token output 170 may be text describing the real world. In particular, the token output 170 may answer a question about the real world posed by text included in the input data element 120. Thus, one technical application of the VLM 100 is to be used by a visually-impaired user to obtain information about the image(s) 120. For example, the VLM 100 may be part of a computer system which obtains the image(s) 120 (e.g. using a camera of the computer system). The user can supply the input text tokens 130 (e.g. by controlling a data input device, or by speaking a command which is converted into text by the computer system, e.g. a string of letters or tokens representing phonemes). The VLM system 100 can then generate the token output 170, e.g. as a string of tokens which are converted into a sound signal which is broadcast to the user by a speaker device. A useful feature of this computer system is its flexibility, since the user may freely define the information which the query processing system should extract from the image(s) 120.

Optionally, the computer system may be configured to allow a user (a person) to generate a series of multiple input data elements 110, each including the same image(s) 120 but with different respective text. For example, the text of a first input data element 110 may be "What is shown in the picture?". If the query processing system generates, in response to the first input data element 110, a corresponding token output 170 (e.g. "A bus"), then the person may be able to define a second input data element 110 including the same image(s) 120 and with new text (e.g. "What destination is on the front of the bus?").

Optionally, each input data element 110 in the series of input data elements 110, except the first input data element 110 of the series, may include the input text tokens and the token output 170 from one or more of the previous input data elements 110 in the series. In this way, the person may engage in a coherent discussion with the VLM 100 about the image(s) 120 (which are typically included in all the input data elements 110 of the series), in which at each stage the VLM 100 generates a token output 170 which is a sensible continuation of the earlier part of the discussion.

Another technical application of the VLM 100 is a captioning system for an image 120, particularly in the case that the image 120 is a video segment (moving image). The text of the input text tokens 130 may define an image processing task such as "provide a caption explaining what is happening", and in this case the token output 170 may comprise a caption describing events or actions depicted in the image 120.

In another technical application, the image 120 comprises text, and the computer system might comprise an OCR (optical character recognition) system for extracting the text from the image 120 to generate at least part of some text in the input text token(s) 130. For example, if the image 120 is an image of a scene comprising a sign with instructions (e.g. the image may be an image of a road including a road sign including text), the OCR may generate the text of the input text tokens 130 based on the instructions in the image. In this case, the token output 170 may indicate the significance of the instructions, given the rest of the scene (e.g. in the case of an image 120 which is an image of an empty parking bay and a sign indicating that parking is allowable at the present time, the token output 170 may be "Please park here").

In another technical application, the input data element 110 may instruct the VLM 100 to generate, as the token output 170, code executable by a processor of a computer system. For example, the input text token 130 may include text which reads "Generate HTML code which when executed generates a video image of the object shown in the image".

In the case that that the input image(s) 120 are video images, the VLM 100 may operate as a video processing system that is configured to analyze a sequence of video frames to detect objects in the video frames and provide information relating to the detected objects in response to a question defined by the input token string. The questions may comprise, for example, a request for a prediction of a future event or state relating to one or more of the objects (e.g. "will objects X and Y collide?"), or a request for conditional or counterfactual information relating to one or more of the objects (e.g. "what event would [not] happen if object X is modified, moved or absent?"), or a request for analysis of the video frames to determine a property or characteristic of one or more of the objects (e.g. "how many objects of type Z are moving?").

The response to the question, the token output 170 may, for example, be in the form of a yes/no answer, or may define a probability distribution over a set of possible answers; or the response may define the location of an object. Implementations of the system are flexible in the types of question that can be defined, and a single implementation of the system can handle multiple different types of question. Merely by way of example, the system can be used to predict whether or not two objects will collide, or how this may be avoided. The response to the query may be used by a human or computer system in many ways. For example the analysis may be useful in itself, or it may be used to provide a warning and/or to control motion of one or more of the objects.

In another application, the VLM 100 may generate output data that categorizes the input images 120 into one or more of a plurality of categories, e.g. by defining a score for each category of a plurality of possible categories for the data items. As another particular application, the multi-modal task may be to provide output data that defines (e.g. as a score) whether the input image(s) are described by text comprised in the input text token(s) 130.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, e.g., inference, workloads.

Machine learning models can be implemented and deployed using a machine learning framework, .e.g., a TensorFlow framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented method of obtaining a multi-modal language model neural network trained to process an input data element comprising at least one media input, to generate a token output comprising text tokens from a vocabulary of text tokens and representing a text response to the input data element, the method comprising a training phase of repeatedly:

   obtaining an input data element comprising at least one media input;
   processing the input data element by the multi-modal language model neural network to generate a corresponding token output;
   processing the token output with a decoder network to generate a plurality of reconstructed media tokens;
   processing the at least one media input of the input data element using a first media encoder neural network that has been trained to process at least one media input to generate a plurality of media tokens characterizing the at least one media input; and
   modifying the multi-modal language model neural network to reduce a loss function comprising a reconstruction loss term indicative of a discrepancy between the reconstructed media tokens and at least one of the media tokens.

2. The method of claim 1, wherein the media input comprises an image, a video and/or a sound signal.

3. The method of claim 1 or claim 2, further comprising modifying the decoder network during the training phase jointly with the modifying of the multi-modal language model neural network, to reduce a prediction loss function including the reconstruction loss term.

4. The method of claim 1, claim 2 or claim 3, further comprising, prior to the training phase, a pre-training phase in which the multi-modal language model neural network is trained to perform a multi-modal task by making repeated updates to the multi-modal language model neural network to reduce a multi-modal loss function indicative of a discrepancy between (i) token outputs produced by the multi-modal language model neural network upon receiving sample input data elements, and (ii) sample token outputs which represent text responses to the corresponding sample input data elements.

5. The method of claim 4 further comprising, prior to the training phase and after the pre-training phase, a decoder training phase of repeatedly:

   obtaining a decoder training input data element comprising at least one media input;
   processing the decoder training input data element by the multi-modal language model neural network to generate a corresponding training token output;
   processing the training token output with the decoder network to generate a plurality of reconstructed training tokens;
   processing the at least one media input of the decoder training input data element using the first media encoder neural network to generate training tokens; and
   modifying the decoder model to reduce a prediction loss function including a reconstruction loss term indicative of a discrepancy between the reconstructed training tokens and at least one of the training tokens;
   the multi-modal language model neural network being unchanged during the decoder training phase.

6. The method of any preceding claim in which the input data element further comprises one or more input text tokens selected from a vocabulary, the corresponding token output generated by the multi-modal language model neural network representing a text response to the at least one media input of the input data element and the one or more input text tokens.

7. The method of claim 6, wherein the multi-modal language model neural network includes:

   a second media encoder neural network configured to receive the at least one media input of an input data element input to the multi-modal language model neural network generate a media encoding vector, and
   a multi-modal neural network configured to receive the one or more input text tokens of the input data element and the media encoding vector, and trained to generate the token output of the multi-modal language model neural network.

8. The method of claim 7, wherein the multi-modal neural network comprises:

a trained language model comprising a plurality of token processing layers and trained to perform a language modeling task on an input consisting of tokens from a vocabulary to generate an output, the trained language model being arranged to receive the one or more input text tokens of the input data element, and and at least one modification layer interleaved with the plurality of token processing layers of the trained language model and arranged to receive the media encoding vector from the second media encoder neural network and to modify the output of the trained language model; and
wherein the modifying of the multi-modal language model neural network is performed by updates to the at least one modification layer and/or the second media encoder neural network, without modifications to the trained language model.

9. The method of claim 8, in which the modifying of the multi-modal language model neural network comprises back-propagating gradients of the loss function with respect to parameters defining the modification layers through the trained language model without adjusting parameters of the trained language model.

10. The method of any of claims 7-9 in which the second media encoder neural network includes:

a media encoder for generating media features from the at least one media input, and
a resampler unit for processing the media features into a media encoding vector of fixed length.

11. The method of claim 10 in which the modifying of the multi-modal language model neural network comprises back-propagating gradients of the loss function with respect to the parameters defining the resampler unit through the trained language model without adjusting parameters of the trained language model.

12. The method of claim 10 or 11, in which the first media encoder neural network comprises the media encoder of the second media encoder neural network.

13. The method of any preceding claim in which the reconstruction loss term is defined based on a subset of the media tokens generated by the first media encoder neural network from the media input of the input data element, and is indicative of a discrepancy between the reconstructed tokens and the subset of the media tokens.

14. A method of performing a multi-modal task on an input data element comprising at least one media input, to generate a token output comprising text tokens from a vocabulary of text tokens and representing a text response to the input data element, the method comprising inputting the input data element to a multi-modal language model neural network obtained by a method of any preceding claim.

15. The method of any preceding claim in which the at least one media input of the input data element is at least one input sound signal.

16. The method of claim 15 in which the at least one input sound signal of the input data element is a sound signal captured using a microphone.

17. The method of any of claims 1 to 14 in which the at least one media input of the input data element is at least one input image.

18. The method of claim 17 in which the first media encoder neural network comprises a vector quantization image encoder.

19. The method of claim 17 or claim 18 in which the at least one input image of the input data element is a captured image of the real world.

20. The method of any of claims 17 to 19 in which the media tokens are image tokens configured for use by an image generation model for generating an image from the image tokens.

21. A system comprising:

one or more computers; and
one or more storage devices storing instructions that, when executed by the one or more computers, cause the one or more computers to perform the method of any one of claims 1-20.

22. A computer-program product containing instructions that when executed by one or more computers cause the one or more computers to perform the method of any one of claims 1-20.

Token
output 170

100 Visual language
model neural
network

Image
encoder
neural
network 140

Image encoding
vector 150

Multi-modal
neural
network 160

Input data element 110

Input
image(s) 120

Input text
token(s) 130

Fig. 1

Fig. 2

309
308
FFW
306
307
Attention
305
304
Tanh gating unit
303
FFW
301
302
Attention

31   32   33

313

323

Fig. 3

VLM: This is a picture of a bird.

User Does it have four legs?

VLM: Yes the gryphon has four legs.

User: Is the bird flying to the right or the left?

VLM: The bird is flying to the right.

Fig. 4

4

500

Reconstruction loss calculation unit

560

Decoder network update unit

570

Decoder network 530

Masking unit

550

Image encoder neural network 540

VLM 520

Input image

Fig. 5

Input data element 510

Reconstruction
loss term 603

VLM update
calculation
unit 620

Reconstruction loss
calculation unit 560

Masked
image tokens

601

Reconstructed
image tokens

602

Masking unit

550

Decoder
network 530

Token
output 170

Multi-modal
loss
function
calculation
unit 610

100 Visual language
model neural
network

Image
encoder
neural
network 140

Image encoding
vector 150

Multi-modal
neural
network 160

Image
encoder
neural
network 540

Input data element 110

Input
image(s) 120

Input text
token(s) 130

Fig. 6

Reconstruction
loss term 603

VLM update
calculation
unit 620

Reconstruction loss
calculation unit 560

Masked
image tokens

601

Reconstructed
image tokens

602

Multi-modal
loss
function
calculation
unit 610

Masking unit

550

Decoder
network 530

Token
output 170

100 Visual language
model neural
network

Image encoder neural
network 140

Image encoding
vector 150

Multi-modal
neural
network 160

701

Resampler

700

Input data element 110

Input
image(s) 120

Input text
token(s) 130

Fig. 7

801 ┌─────────────────────────────────────────┐
    │  Train media encoder neural network(s)  │
    └─────────────────────────────────────────┘

800 ↘

802 ┌─────────────────────────────────────────┐
    │  Train language model                   │
    └─────────────────────────────────────────┘

Fig. 8

803 ┌─────────────────────────────────────────┐
    │  Pre-train MMLM to perform multi-modal task │
    └─────────────────────────────────────────┘

804 ┌─────────────────────────────────────────┐
    │  Train decoder model                    │
    └─────────────────────────────────────────┘

805 ┌─────────────────────────────────────────┐
    │  Training phase for MMLM                 │
    └─────────────────────────────────────────┘

806 ┌─────────────────────────────────────────┐
    │  Perform multi-modal task using the MMLM │
    └─────────────────────────────────────────┘

805

901  Obtain an input data element comprising at least one media input

902  Process the input data element by the MMLM to generate a corresponding token output

903  Processing the token output with a decoder network to generate a plurality of reconstructed media tokens

904  Process the media input (s) using a first media encoder neural network trained to process media inputs to generate a plurality of media tokens characterizing the media input(s)

905  Modify the MMLM to reduce a loss function including a reconstruction loss term

906  Modify the decoder network reduce a prediction loss function including the reconstruction loss term

Fig. 9

Europäisches
Patentamt

European
Patent Office

Office européen
des brevets

# EUROPEAN SEARCH REPORT

Application Number

EP 23 20 5788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JEAN-BAPTISTE ALAYRAC ET AL: "Flamingo: a Visual Language Model for Few-Shot Learning", ARXIV.ORG, CORNELL UNIVERSITY LIBRARY, 201 OLIN LIBRARY CORNELL UNIVERSITY ITHACA, NY 14853, 29 April 2022 (2022-04-29), XP091210828, * abstract; sections 3, 3.1.1, 3.1.2, 3.2.3, 4, 4.1.4, 4.4.3 Equation 2; figures 3, 4, 5, 8 * | 1-22 | INV. G06N3/0455 G06N3/0475 G06N3/084 |
| A | HUAISHAO LUO ET AL: "UniVL: A Unified Video and Language Pre-Training Model for Multimodal Understanding and Generation", ARXIV.ORG, CORNELL UNIVERSITY LIBRARY, 201 OLIN LIBRARY CORNELL UNIVERSITY ITHACA, NY 14853, 15 September 2020 (2020-09-15), XP081761369, * abstract; sections 3 and 4; figure 3 * | 1-22 | |
| A | WO 2022/258666 A1 (DEEPMIND TECH LTD [GB]) 15 December 2022 (2022-12-15) * abstract; claims 1-20; figure 4 * | 1-22 | TECHNICAL FIELDS SEARCHED (IPC) G06N |
| A | US 11 264 009 B2 (MITSUBISHI ELECTRIC RES LABORATORIES INC [US]) 1 March 2022 (2022-03-01) * abstract; claims 1-20; figure 2A * | 1-22 | |

-/--

The present search report has been drawn up for all claims

| Place of search | Date of completion of the search | Examiner |
|---|---|---|
| The Hague | 25 March 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

Application Number

EP 23 20 5788

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG JIN ET AL: "Unified Language-Vision Pretraining with Dynamic Discrete Visual Tokenization", ARXIV.ORG, CORNELL UNIVERSITY LIBRARY, 201 OLIN LIBRARY CORNELL UNIVERSITY ITHACA, NY 14853, 9 September 2023 (2023-09-09), XP091609694, * abstract; sections 3 and 4; figures 1, 2 * | 1-22 | |

TECHNICAL FIELDS
SEARCHED      (IPC)

The present search report has been drawn up for all claims

| Place of search | Date of completion of the search | Examiner |
|---|---|---|
| The Hague | 25 March 2024 | Tebbal Barracosa, B |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 23 20 5788

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2024

| Patent document cited in search report | Publication date | Patent family member(s) | Publication date |
|---|---|---|---|
| WO 2022258666 A1 | 15-12-2022 | AU 2022288746 A1 | 28-09-2023 |
| | | BR 112023020614 A2 | 19-12-2023 |
| | | CA 3214735 A1 | 15-12-2022 |
| | | CN 117121015 A | 24-11-2023 |
| | | EP 4302239 A1 | 10-01-2024 |
| | | IL 307517 A | 01-12-2023 |
| | | KR 20230152741 A | 03-11-2023 |
| | | WO 2022258666 A1 | 15-12-2022 |
| US 11264009 B2 | 01-03-2022 | CN 114365121 A | 15-04-2022 |
| | | EP 3857459 A1 | 04-08-2021 |
| | | JP 7313558 B2 | 24-07-2023 |
| | | JP 2022539620 A | 12-09-2022 |
| | | US 2021082398 A1 | 18-03-2021 |
| | | WO 2021049199 A1 | 18-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. SAHARIA et al.** Photorealistic Text-to-Image Diffusion Models with Deep Language Understanding. *arXiv:2205.11487*, 2022
- **J-B ALAYRAC et al.** *Flamingo: a Visual Learning Model for Few-Shot Learning*, 2022, https://arxiv.org/pdf/2204.14198.pdf
- **A. VAN DEN OORD et al.** Neural Discrete Representation Learning. *arXiv: 1711.00937*, 2017
- **P. ESSER et al.** Taming transformers for high resolution image synthesis. *arXiv:2012.09841*, 2021
- **A. BROCK et al.** High-performance large-scale image recognition without normalization. *arXiv: 2102.06171*, 2021

- **RADFORD et al.** Learning Transferable visual models from natural language supervision. *arXiv:2103.00020*, 2021
- **A. JAEGLE et al.** *Perceiver: General Perception with iterative attention*, 2021
- **J. HOFFMANN et al.** *Training compute-optimal large language models*, 2022
- **BROWN et al.** Language models are few-shot learners. *Conference on Neural Information Processing Systems*, 2020
- **VASWANI et al.** Attention is all you need. *31st Conference on Neural Information Processing Systems (NIPS 2017), Long Beach, CA, USA*
- **H. CHANG et al.** *MaskGIT: Masked Generative Image Transformer*, 2022, https://arxiv.org/abs/2202.04200.